# EUROPÄISCHE PATENTSCHRIFT

(11) **EP 0 534 084 B1**
(45) Veröffentlichungstag und Bekanntmachung des Hinweises auf die Patenterteilung: **21.12.1994**
(21) Anmeldenummer: 92112653.8
(22) Anmeldetag: 24.07.1992
(51) Int. Cl.: B60R 11/02, H04R 5/02, H04R 1/02

(54) **Anordnung und Beschaltung von Lautsprechereinheiten im Deckenbereich eines Fahrgastraumes eines Verkehrsmittels**
Speaker system and circuit on the roof of the passenger compartment of a vehicle
Circuit et système de haut-parleurs encastrés dans le plafond de l'habitacle d'un véhicule

(30) Priorität: 21.09.1991 DE 4131439
(43) Veröffentlichungstag der Anmeldung: 31.03.1993
(73) Patentinhaber: MERCEDES-BENZ AG, 70327 Stuttgart (DE)
(72) Erfinder: Kalt, Hans-Peter, W-7036 Schönaich (DE); Ballas, Hans-Werner, W-7440 Nürtingen-Neckarhausen (DE)

(56) Entgegenhaltungen:
- WO-A-88/01580
- DE-A- 3 608 048
- US-A- 4 703 502

## Beschreibung

Die Erfindung betrifft eine Anordnung und Beschaltung von Lautsprechereinheiten gemäß dem Oberbegriff des Anspruches 1.

Es ist eine Sitzplatzstereoanlage für einen Reiseomnibus bekannt, bei welcher im Deckenbereich Lautsprecher kanalbezogen abwechselnd pro Doppelsitz angeordnet sind, d.h. die Fahrgäste hören die Kanäle von vorne und hinten.

Aufgabe der Erfindung ist es, eine Sitzplatzstereoanlage unter Berücksichtigung der räumlichen Einbaumöglichkeiten so auszubilden, daß ein bestmöglicher räumlicher Stereoklang bezogen auf einen Doppelsitz des Verkehrsmittels erzielt wird.

Diese Aufgabe wird erfindungsgemäß mit den kennzeichnenden Merkmalen des Anspruches 1 gelöst.

Ein Ausführungsbeispiel der Erfindung ist in der Zeichnung dargestellt und wird im folgenden näher beschrieben. Es zeigen
- Figur 1: in schematischer Darstellung die Anordnung und Beschaltung von Lautsprechereinheiten bezogen auf Doppelsitze des Verkehrsmittels und
- Figur 2: eine vergrößerte Darstellung einer Lautsprechereinheit gemäß der Schnittlinie II-II in Figur 1.

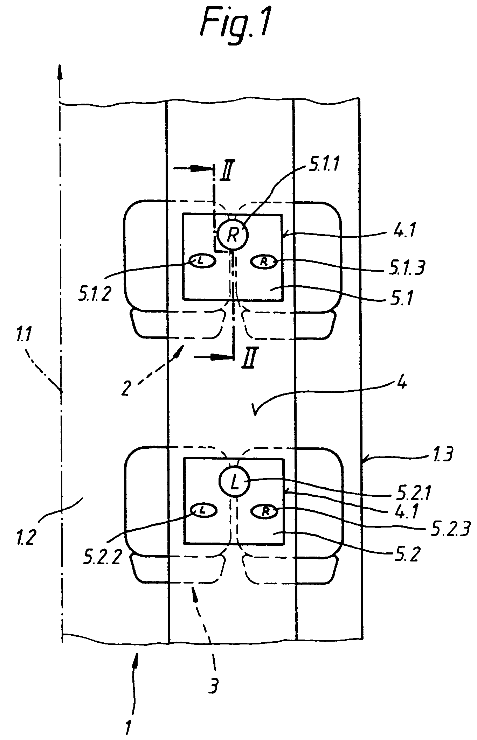

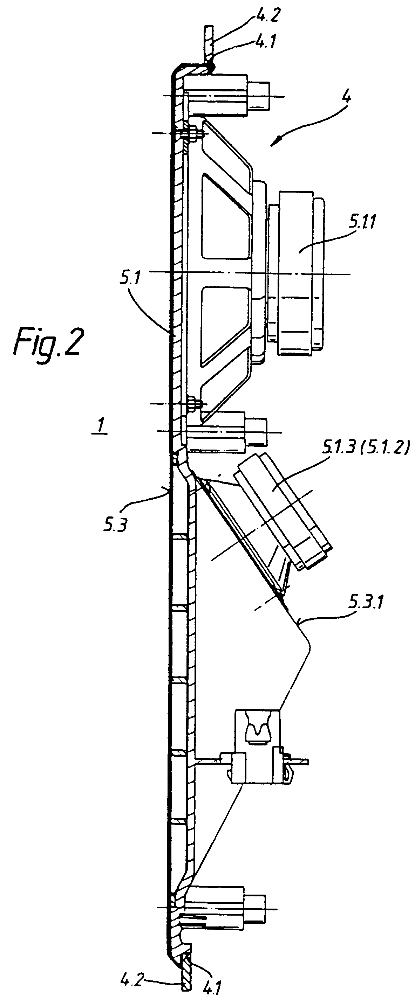

In Figur 1 sind rechts der Längsmittellinie 1.1 des Fahrgastraumes 1 zwischen dem Raumgang 1.2 und der Fensteraußenwand 1.3 eines Reiseomnibus zwei Doppelsitze 2 und 3 dargestellt. Der Fahrgastraum wird im Deckenbereich in etwa mittig zu den Doppelsitzen von einem Panelkanal 4 durchzogen, welcher zur Belüftung und/oder Klimatisierung des Fahrgastraumes mit Luft beaufschlagt ist. Wie iVm Figur 2 ersichtlich ist, sind in Ausschnitte 4.1 der Panelkanalwand 4.2 Lautsprechereinheiten 5.1 und 5.2 mittels einer Trägerplatte 5.3 eingesetzt, wobei jede einen Mittel-Tiefton-Lautsprecher 5.1.1 und 5.2.1 und je zwei Hochtonlautsprecher 5.1.2, 5.1.3 - 5.2.2, 5.2.3 umfaßt. Bezogen auf den mittig in der Lautsprechereinheit 5.1, 5.2 angeordneten Mittel-Tiefton-Lautsprecher 5.1.1, 5.2.1 sind die beiden Hochton-Lautsprecher 5.1.2, 5.1.3 - 5.2.2, 5.2.3 zu diesem symmetrisch mit größt möglichem Abstand und hinter diesem angeordnet. Während die Hauptabstrahlrichtung des Mittel-Tiefton-Lautsprechers 5.1.1, 5.2.1 nach unten gerichtet ist, ist die Hauptabstrahlrichtung der Hochton-Lautsprecher schräg nach hinten und unten gerichtet, also in etwa auf die Kopfhöhe von auf den Sitzen plazierten Passagieren, was dadurch erreicht wird, daß der Hochton-Lautsprecher 5.1.2, 5.1.3, 5.2.2, 5.2.3 auf einer entsprechenden schrägen Ausformung 5.3.1 der Trägerplatte 5.3 angeordnet ist.

Wie nun wiederum aus Figur 1 ersichtlich ist, ist jedem der beiden Hochton-Lautsprecher 5.1.2, 5.1.3 bzw. 5.2.2, 5.2.3 ein Stereokanal aufgeschaltet, so die beiden Hochton-Lautsprecher 5.1.2, 5.2.2 mit dem linken und die beiden Hochton-Lautsprecher 5.1.3 und 5.2.3 mit dem rechten Stereokanal. Hingegen ist auf den Mittel-Tiefton-Lautsprecher 5.1.1 der einen Lautsprechereinheit 5.1 nur ein Stereokanal, bspw. der rechte, und auf den Mittel-Tiefton-Lautsprecher 5.2.1 der folgenden Lautsprechereinheit 5.2 ebenfalls nur ein - und zwar der andere - Stereokanal, im Ausführungsbeispiel dann der linke, aufgeschaltet. Dies erfolgt dann immer im Wechsel bezogen auf die einzelnen Doppelsitze. Die kanalbezogen wechselweise Anordnung von Mittel-Tieftönern ist hierbei für den Raumklang nicht nachteilig, da bekanntlich die tiefen Töne nahezu richtungsunabhängig sind, hingegen vermitteln die beiden auf die Passagiere gerichteten Hochtöner einen gut hörbaren Raumklang, der durch eine elektronische Breitschaltung der Lautsprecher noch verstärkt werden kann. Ferner wird durch die Ausbildung der Lautsprecher ohne eigene Boxenkörper und deren Anordnung im Panelkanal der Klang noch insofern verbessert, als der Panelkanal als Hinterschaltraum genutzt wird.

## Patentansprüche

1. Anordnung und Beschaltung von Lautsprechereinheiten im Dekkenbereich eines Fahrgastraumes eines Verkehrsmittels, insbesondere eines Reiseomnibus, mit mehreren hintereinander angeordneten Doppelsitzen,
**dadurch gekennzeichnet,**
daß daS jede Lautsprechereinheit (5.1; 5.2) zwei Hochton-(5.1.2, 5.1.3; 5.2.2, 5.2.3) und einen Mittel-Tiefton-Lautsprecher (5.1.1; 5.2.1) umfaßt,
daß jeweils eine Lautsprechereinheit oberhalb und nahezu mittig zu einem Doppelsitz (2; 3) in einem den Fahrgastraum (1) längs durchziehenden Decken-Panelkanal (4) angeordnet ist,
daß die beiden Hochton-Lautsprecher symmetrisch zum nach unten hauptabstrahlenden Mittel-Tiefton-Lautsprecher und hinter diesem und mit schräg nach hinten und unten gerichteter Hauptabstrahlrichtung angeordnet sind,
daß jeder der beiden Hochtonlautsprecher für einen Stereokanal (links/rechts), hingegen der Mittel-Tiefton-Lautsprecher für nur einen Stereokanal (links oder rechts) vorgesehen ist,
wobei einem für den einen Stereokanal vorgesehenen Mittel-Tiefton-Lautsprecher der einen Lautsprechereinheit ein für den anderen Stereokanal vorgesehener Mittel-Tiefton-Lautsprecher der nächsten Lautsprechereinheit folgt.

2. Anordnung und Beschaltung nach Anspruch 1,
**dadurch gekennzeichnet,**
daß die Lautsprecher einer jeden Einheit ohne eigene Boxenkörper auf einer Trägerplatte (5.3) angeordnet sind, welche in eine entsprechende Öffnung (4.1) des als Hinterschallraum dienenden Decken-Panelkanals (4) eingesetzt ist.

3. Anordnung und Beschaltung nach Anspruch 1,
**gekennzeichnet durch**
eine elektronische Breitschaltung der Hochton-Lautsprecher.

## Claims

1. Disposition and wiring of loudspeaker units in the ceiling area of a passenger compartment of a traffic medium, in particular of a touring bus, with a plurality of double seats disposed one behind another, characterised in that each loudspeaker unit (5.1; 5.2) comprises two treble speakers (5.1.2, 5.1.3; 5.2.2, 5.2.3) and one medium-bass loudspeakers (5.1.1; 5.2.1) and in that in each case one loudspeaker unit is disposed above and almost centrally in relation to a double seat (2; 3) in a ceiling panel channel (4) extending longitudinally through the passenger compartment (1) and in that the two treble loudspeakers are disposed symmetrically in respect of the downwardly mainly irradiating medium-bass loudspeaker and behind this latter and with an obliquely rearwardly and downwardly directed main direction of irradiation and in that each of the two treble loudspeakers is envisaged for a stereo channel (left-right) while the medium-bass loudspeaker is intended for only one stereo channel (left or right), whereby a medium-bass loudspeaker of one loudspeaker unit which is envisaged for one stereo channel follows a medium-bass loudspeaker of the next loudspeaker unit which is provided for the other stereo channel.

2. A disposition and wiring according to claim 1, characterised in that the loudspeakers of each unit are disposed on a supporting panel (5.3) with no housings of their own, the supporting panel being inserted into a corresponding aperture (4.1) in the ceiling panel channel (4) which serves as a background sound chamber.

3. A disposition and wiring according to claim 1, characterised by an electronic broad wiring circuit for the treble loudspeakers.

## Revendications

1. Disposition et câblage d'unités de haut-parleurs dans la zone du plafond de l'habitacle ou compartiment à passagers d'un moyen de transport, en particulier d'un autocar, comportant plusieurs doubles sièges placés l'un derrière l'autre,
caractérisés en ce
que chaque unité de haut-parleurs (5.1; 5.2) comprend deux haut-parleurs pour aigus (5.1.2, 5.1.3; 5.2.2, 5.2.3) et un haut-parleur pour le médium et les graves (5.1.1; 5.2.1),
qu'une unité de haut-parleurs est disposée chaque fois au-dessus et presque au milieu par rapport à un double siège (2; 3) dans un conduit (4) s'étendant le long du plafond dans le compartiment à passagers (1) et formé par des panneaux,
que les deux haut-parleurs pour les aigus sont disposés symétriquement par rapport au haut-parleur pour le médium et les graves et derrière celui-ci, avec la direction principale de rayonnement orientée obliquement vers l'arrière et le bas, la direction principale de rayonnement du haut-parleur pour le médium et les graves étant orientée vers le bas, et
que chacun des deux haut-parleurs pour les aigus est prévu pour une voie stéréophonique (gauche/droite), alors que le haut-parleur pour le médium et les graves est seulement prévu pour une voie (gauche ou droite), l'agencement étant tel qu'un haut-parleur pour le médium et les graves prévu pour une voie et faisant partie d'une unité de haut-parleurs fasse suite à un haut-parleur pour le médium et les graves prévu pour l'autre voie stéréophonique de l'unité de haut-parleurs suivante.

2. Disposition et câblage selon la revendication 1, caractérisés en ce que les haut-parleurs de chaque unité sont disposés, sans enceintes individuelles, sur une plaque support (5.3) qui est montée dans une ouverture adéquate (4.1) du conduit (4) formé au plafond par des panneaux et servant d'espace acoustique arrière.

3. Disposition et câblage selon la revendication 1, caractérisés en ce que les haut-parleurs pour les aigus sont pourvus d'un circuit électronique d'élargissement sonore.
